# EUROPEAN PATENT APPLICATION

(11) **EP 4 456 520 A1**
(43) Date of publication of application: **30.10.2024**
(21) Application number: 24164957.3
(22) Date of filing: 20.03.2024
(51) Int. Cl.: H04N 1/04

(54) **IMAGE READING DEVICE**

(30) Priority: 22.03.2023 JP 2023045125
(71) Applicant: Seiko Epson Corporation, Tokyo 160-8801 (JP)
(72) Inventor: NAMIKI, Masaki, Suwa-shi, 392-8502 (JP); TSUYAMA, Kazuhiko, Suwa-shi, 392-8502 (JP)
(74) Representative: Lewis Silkin LLP

(57) **Abstract**

It includes a transport section configured to transport a document, a reading section configured to read an image of the document transported in a transport direction by the transport section, and a rotation member that is provided with, on a peripheral surface, at least two background sections having colors different in brightness from each other, that is provided at a position facing the reading section, and that, by rotating, changes a position of the background section with respect to a reading position of the reading section, wherein the rotation member is separable from the reading section.

## Description

The present application is based on, and claims priority from JP Application Serial Number 2023-045125, filed March 22, 2023, the disclosure of which is hereby incorporated by reference herein in its entirety.

### BACKGROUND

### 1. Technical Field

The present disclosure relates to an image reading device.

### 2. Related Art

An example of this type of apparatus is disclosed in JP-A-2008-252378. JP-A-2008-252378 discloses that a platen roller 10 is provided with a semi-cylindrical white member (arcuate cylindrical member) 14 and a semi-cylindrical black member (arcuate cylindrical member) 15.

However, in the configuration disclosed in JP-A-2008-252378, the gap between the platen roller and the reading sensor is constant and the reading of documents having different thicknesses is not considered. Therefore, when a thick document is transported, the reading quality may not be stable because the distance between the document and the reading sensor will still be the distance for a thin document.

### SUMMARY

An image reading device according to the present disclosure includes a transport section configured to transport a document; a reading section configured to read an image of the document transported in a transport direction by the transport section; and a rotation member that is provided with, on a peripheral surface, at least two background sections having colors different in brightness from each other, that is provided at a position facing the reading section, and that, by rotating, changes a position of the background section with respect to a reading position of the reading section, wherein the rotation member is separable from the reading section.

### BRIEF DESCRIPTION OF THE DRAWINGS

FIG. 1 is a diagram showing internal configuration of an image reading device according to a first embodiment.
FIG. 2 is a perspective view of a main part of the first embodiment.
FIG. 3 is a perspective view of a main part of the first embodiment with a portion in cross section.
FIGS. 4A and 4B are cross-sectional views of a main section of the first embodiment.
FIG. 5 is a cross-sectional view of a main section of the first embodiment.
FIG. 6 is a perspective view of a main part of the first embodiment.
FIG. 7 is a cross-sectional view of a main part of a second embodiment.

### DESCRIPTION OF EMBODIMENTS

The present disclosure will first be schematically described below.

In order to solve the above problem, a first aspect of an image reading device according to the present disclosure includes a transport section configured to transport a document; a reading section configured to read an image of the document transported in a transport direction by the transport section; and a rotation member that is provided with, on a peripheral surface, at least two background sections having colors different in brightness from each other, that is provided at a position facing the reading section, and that, by rotating, changes a position of the background section with respect to a reading position of the reading section, wherein the rotation member is separable from the reading section.

According to this aspect, the rotation member having at least two background sections on the peripheral surface thereof is configured to be separable from the reading section. Thus, when a thick document is transported, by separating the rotation member from the reading section by an amount corresponding to an increase in the thickness of the thick document, the background section can be positioned at an appropriate position according to the thickness of the document, thereby stabilizing the reading quality.

Since the rotation member is separable, it is possible to suppress the possibility that the thick document hits the background section when the document is being transported, and it is possible to reduce the possibility that the background section is damaged or that the document jams.

A second aspect of the image reading device according to the present disclosure is an aspect according to the first aspect, further including a guide member that is provided upstream of the rotation member in the transport direction and that guides the document between the reading section and the rotation member, wherein the guide member is separable from a transport path along which the document is transported.

According to this aspect, a guide member is provided upstream of the rotation member in the transport direction and guides the document between the reading section and the rotation member, so that the document can be appropriately guided between the reading section and the rotation member.

The guide member is separable from a transport path along which the document is transported. Thus, when a thick document is transported, the guide member is separated from the transport path by an amount corresponding to the increase in thickness, so that the document can be guided at an appropriate position according to the thickness.

A third aspect of the image reading device according to the present disclosure is an aspect according to the second aspect, wherein the rotation member separates from the reading section in association with separation of the guide member from the transport path.

According to this aspect, the rotation member is separated from the reading section in association with separation of the guide member. Thus, the rotation member can be separated from the reading section with good response when documents having different thicknesses are transported.

A fourth aspect of the image reading device according to the present disclosure is an aspect according to the third aspect, wherein the guide member separates from the transport path by contact with the transported document by an amount corresponding to the thickness of the document.

According to this aspect, since the guide member is separated from the transport path by contact with the transported document, a drive source for separating the guide member is not required, and the configuration can be simplified.

A fifth aspect of the image reading device according to the present disclosure is an aspect according to the fourth aspect, wherein the guide member and the rotation member are integrated by a pair of coupling members positioned on one end side and on the other end side in the width direction of the document, and are configured to move integrally in a separation direction and in a state where the document is not being transported, a relative arrangement of the rotation member and the reading section and a relative arrangement of the guide member and the transport path are determined in a state where the coupling member contacts a contacted surface of the reading section.

According to this aspect, the guide member and the rotation member are integrally moved in the separation direction via the coupling member. Thus, the separation of the guide member from the transport path and the separation of the rotation member from the reading section can be performed simultaneously with a simple structure. The separation state between the reading section and the rotation member can be maintained from when the leading end of the transported document comes into contact with the guide member to when the trailing end of the document comes out of contact with the rotation member.

A sixth aspect of the image reading device according to the present disclosure is an aspect according to the second aspect, further including a pressing member for elastically pressing the guide member toward the transport path.

According to this aspect, since a pressing member for elastically pressing the guide member toward the transport path is provided, the document can be held down by the guide member, thereby improving the transport performance.

A seventh aspect of the image reading device according to the present disclosure is an aspect according to any one of the second aspect to the sixth aspect, wherein the guide member has a roller whose peripheral surface is a curved surface.

According to this aspect, by using a roller whose peripheral surface is a curved surface as the guide member, the leading end of the document comes into contact with the curved surface of the roller, so that it is possible to suppress the leading end of the document from being bent, and it is possible to suppress a transport failure caused by transport load.

An eighth aspect of the image reading device according to the present disclosure is an aspect according to the seventh aspect, wherein the roller is a drive roller rotated by a first drive source.

According to this aspect, when a thick document such as a passport or a booklet is transported, the transport amount may not be stable due to the transport load received from the transport path. According to this aspect, by the use of a drive roller, it is possible to stabilize the amount of transport when transporting a thick document.

A ninth aspect of the image reading device according to the present disclosure is an aspect according to the eighth aspect, wherein the transport section is driven by the power of the first drive source.

According to this aspect, since the transport section and the drive roller are rotated by the same first drive source, the transporting amount of the document is stabilized, and the image can be read with higher quality.

A tenth aspect of the image reading device according to the present disclosure is an aspect according to any one of the first aspect to the sixth aspect, wherein the rotation member includes a first rotation roller having, as the background section, a peripheral surface in a first color and a second rotation roller having, as the background section, a peripheral surface in a color different from the first color.

According to the present aspect, the first rotation roller and the second rotation roller are provided as the background section. By this, when the document is transported to the rotation member, the first rotation roller and the second rotation roller are rotated while serving as the background section, so that the document can be stably transported. It is possible to reduce a possibility that the background section is damaged or that the document jams due to the rotation.

An eleventh aspect of the image reading device according to the present disclosure is an aspect according to the tenth aspect, wherein the first rotation roller and the second rotation roller are drive rollers rotated by power of a drive source.

When a thick document is transported, the transport amount may not be stable due to the transport load received from the transport path. According to this aspect, the first rotation roller and the second rotation roller are drive rollers that are rotated by power of a drive source. This makes it possible to apply a transporting force to the thick document by driving and rotating the roller used as the background section, thereby stabilizing the transport amount at the time of transport.

A twelfth aspect of the image reading device according to the present disclosure is an aspect according to any one of the second aspect to the sixth aspect, wherein the rotation member is a calibration reference section for performing color calibration of the reading section.

According to the present aspect, the rotation member includes a calibration reference section for performing color calibration of the reading section. Thus, by providing the calibration reference section dedicated to color calibration on the same rotation member as the background section, the calibration reference section can be provided in a simple structure without increasing the number of components.

A thirteenth aspect of the image reading device according to the present disclosure includes a transport section configured to transport a document; a first reading section configured to read an image of a first surface of the document transported in a transport direction through a transport path by the transport section, a first rotation member that is provided with at least two background sections having colors different in brightness from each other, that is provided at a position facing the first reading section, and that, by rotating, changes a position of the background section with respect to a reading position of the first reading section; a second reading section that is provided downstream of the first reading section in the transport direction and that is configured to read an image of a second surface of the document transported by the transport section; and a second rotation member that is provided with at least two background sections having colors different in brightness from each other, that is provided at a position facing the second reading section, and that, by rotating, changes a position of the background section with respect to a reading position of the second reading section, wherein at least one of the first reading section or the first rotation member is separable from the other and at least one of the second reading section or the second rotation member is separable from the other.

According to the present aspect, at least one of the first reading section and the first rotation member is configured to be separable from the other and at least one of the second reading section and the second rotation member is configured to be separable from the other. That is, the first rotation member and the second rotation member having at least two background sections on the peripheral surfaces thereof are configured to be relatively separable from the first reading section and the second reading section. As a result, when a thick document is transported, by separating the first rotation member and the second rotation member from the first reading section and the second reading section by the increased amount of the thickness, it is possible to position the background section at an appropriate position in accordance with the thickness, thereby stabilizing the reading qualities.

A fourteenth aspect of the image reading device according to the present disclosure is an aspect according to the thirteenth aspect, wherein the first surface is an upper surface and the second surface is a lower surface, the first reading section is fixed and the first rotation member is separable from the first reading section, and the second rotation member is fixed and the second reading section is separable from second rotation member.

When a member located below the transport path is moved to separate from or approach it, a mechanism for pushing up the member or maintaining the posture of the member is required, which tends to complicate the structure. According to this aspect, it is possible to suppress the complication of the structure by adopting a structure in which the member located below the transport path is fixed and the member located above the transport path is separated from and brought closer to it.

A fifteenth aspect of the image reading device according to the present disclosure is an aspect according to the thirteenth aspect, wherein the first reading section is fixed and the first rotation member is separable from the first reading section, and the second reading section is fixed and the second rotation member is separable from the second reading section.

According to this aspect, since the first reading section and the second reading section are fixed, the quality of reading can be stabilized.

A sixteenth aspect of the image reading device according to the present disclosure is an aspect according to the fifteenth aspect, the image reading device further including a first pressing member that resiliently pushes the first rotation member toward the first reading section and a second pressing member that resiliently pushes the second rotation member toward the second reading section, wherein a pressing force of the first pressing member is larger than a pressing force of the second pressing member.

According to this aspect, since the pressing force of the first pressing member is larger than the pressing force of the second pressing member, the first rotation member provided below the transport path can be maintained in an appropriate posture.

### EMBODIMENT

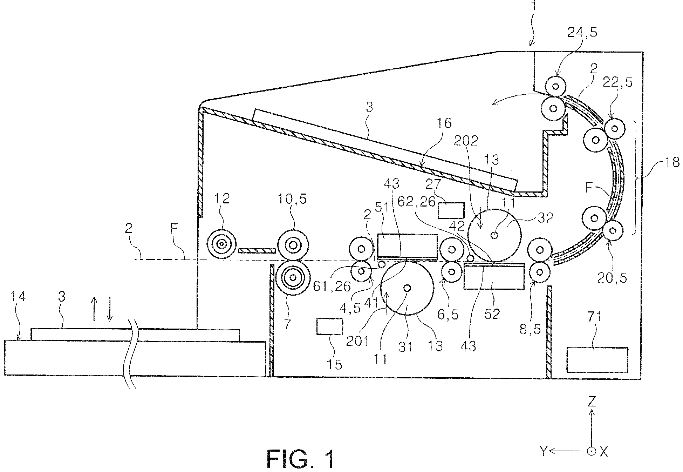

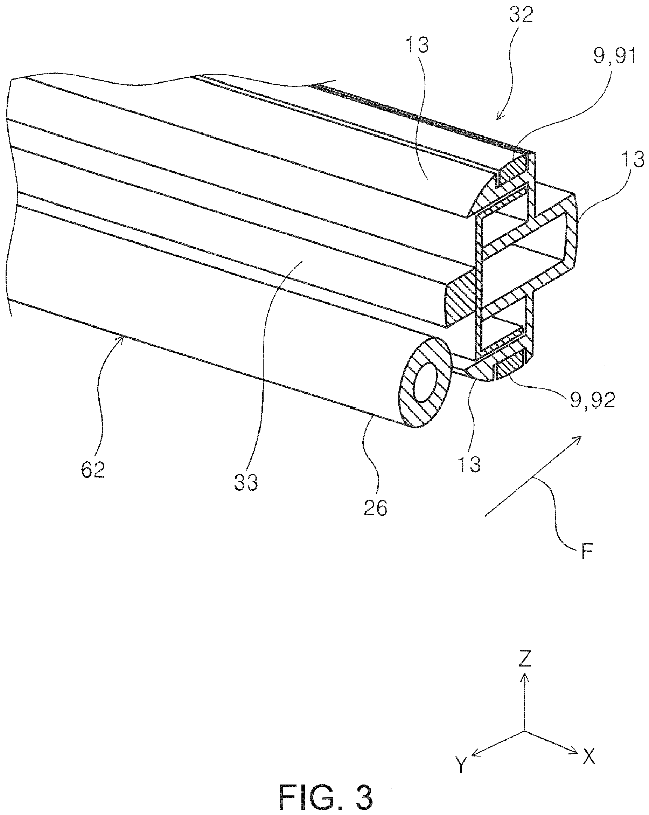

Hereinafter, an embodiment of an image reading device according to the present disclosure will be specifically described with reference to FIGS. 1 to 6.

In the following description, three axes orthogonal to each other are referred to as an X axis, a Y axis, and a Z axis, respectively, as shown in the drawings. The direction indicated by the arrows of the three axes (X, Y, Z) is the + direction of each direction, and the reverse is the - direction. The Z-axis direction corresponds to the vertical direction, that is, the direction in which gravity acts, and the +Z direction indicates the vertically upward direction and the -Z direction indicates the vertically downward direction. The X-axis direction and the Y-axis direction correspond to horizontal directions. The +Y direction indicates the direction to the front of the device and the -Y direction indicates the direction to the rear of the device. The +X direction is to the right of the device and the -X direction is to the left of the device.

### FIRST EMBODIMENT

### Overall structure of the image reading device

An image reading device 1 of the present embodiment is a scanner capable of reading an image of a document. Here, an image refers to an image visually recorded on a document, for example, a character, a figure, a table, a picture, or a photograph. The document is not limited to a sheet, but may be a card, a booklet, or the like.

As shown in FIG. 1, the image reading device 1 includes a first reading section 51 and a second reading section 52 for reading an image of a document 3, a first transport roller 4 that is for transporting the document 3 along a transport path 2 in a transport direction F and that is provided upstream of the first reading section 51 in the transport direction F, a second transport roller 6 provided upstream of the second reading section 52, which is located downstream of the first reading section 51, and a third transport roller 8 provided downstream of the second reading section 52.

A roller pair of a feed roller 10 and a separation roller 7 is arranged upstream of the first transport roller 4 in the transport direction F. The feed roller 10 is a drive roller that rotates by power of a drive source (not shown) and transports the document 3 in the transport direction F. The separation roller 7 is a drive roller that rotates by power of a drive source (not shown), and is a roller that separates a single sheet from plural sheets of a document 3.

Here, a retard roller is used as the separation roller 7. The separation roller 7 is rotated in a rotation direction for feeding the document 3 to the upstream side (+Y direction) of the transport direction F by the power of the drive source. The separation roller 7 is provided with a torque limiter (not shown), and since a torque exceeding a set value is applied to the torque limiter when the separated document 3 is transported, the separation roller 7 is driven to rotate in a rotation direction that sends the document 3 to the downstream side (-Y direction) in the transport direction F.

A pickup roller 12 is disposed upstream of the separation roller 7. The pickup roller 12 is a drive roller which rotates by the power of the same drive source as the feed roller 10, and transports the document 3 toward the transport direction F. The first transport roller 4, the second transport roller 6, and the third transport roller 8, which constitute a transport section 5 for transporting the document 3 in the transport direction F, are also provided with drive rollers rotated by the power of the first drive source 15.

In the present embodiment, a curved inversion path 18 is provided downstream of the third transport roller 8. The fourth transport roller 20, the fifth transport roller 22, and the discharge roller 24 are arranged in the curved inversion path 18 in this order along the transport direction F.

In FIG. 1, reference numeral 71 denotes a control section. The control section 71 controls drive of the first drive source 15 and drive of the second drive source 27 in correspondence with the transport of the medium 3. The control section 71 includes a CPU, a flash ROM, and a RAM. The CPU performs various calculation processes according to a program stored in the flash ROM, and controls the operation of the entire image reading device 1. The flash ROM, which is an example of the storage means, is a nonvolatile memory that can be read from or written into. Various kinds of information are temporarily stored in the RAM, which is an example of the storage means.

In FIG. 1, reference numeral 14 denotes a document placement section for setting a document 3 to be read, and reference numeral 16 denotes a discharge receiving section to which the read document 3 is discharged.

The document placement section 14 is configured to move vertically. When the document 3 set on the document placement section 14 is to be fed in the transport direction F, the document placement section 14 first moves upward (+Z direction), and stops in a state where the uppermost sheet of the set document 3 is in contact with the pickup roller 12. In this state, the pickup roller 12 is rotated to feed the document 3 in the transport direction F, and the leading end of the document 3 reaches the nip position between the pair of rollers of the feed roller 10 and the separation roller 7.

When there is a multi-feed state in which plural sheets of the document 3 are being fed, one sheet is separated by the separation roller 7, the one sheet is transported in the transport direction F by the first transport roller 4, and the image on the first surface of the document 3 is read by the first reading section 51. Further, the document 3 read by the first reading section 51 is transported by the second transport roller 6, and the image of the second surface, which is the opposite from the first surface, of the document 3 is read by the second reading section 52.

The document 3 that has been read by the second reading section 52 is sent to the curved inversion path 18 by the third transport roller 8, transported by the fourth transport roller 20 and the fifth transport roller 22, and discharged to the discharge receiving section 16 by the discharge roller 24.

### Rotation member background section

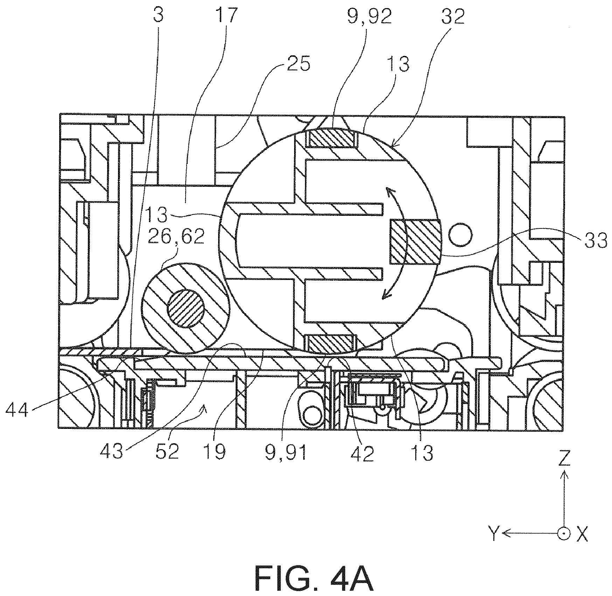

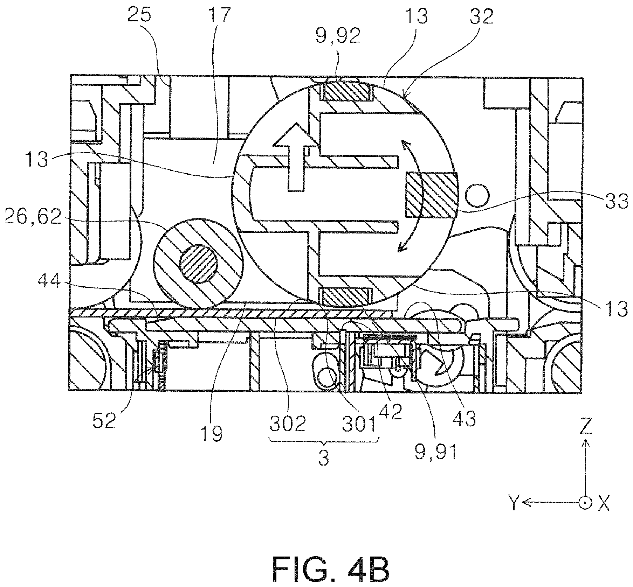

As shown in FIGS. 1 to 6, in the present embodiment, the image reading device 1 includes the transport section 5 for transporting the document 3 and the first reading section 51 for reading an image of a first surface 301 (FIGS. 4A and 4B), which is an upper surface of the document 3 transported along the transport path 2 in the transport direction F by the transport section 5. The second reading section 52 is provided downstream of the first reading section 51 in the transport direction F and reads an image of a second surface 302 (FIGS. 4A and 4B), which is a lower surface of the document 3 transported by the transport section 5.

A first rotation member 31, which is a rotation member, is provided at a position facing the first reading section 51. A second rotation member 32, which is a rotation member, is provided at a position facing the second reading section 52.

In the present embodiment, the first reading section 51 is located on the upper side of the transport path 1 and the first rotation member 31 facing the first reading section 51 is located on the lower side of the transport path 2. On the other hand, the second reading section 52 is located on the lower side of the transport path 2 and the second rotation member 32 that faces it is located on the upper side of the transport path 2.

The first reading section 51 and the second reading section 52 have the same structure and the first rotation member 31 and the second rotation member 32 have the same structure. The two sets differ only in that the upper and lower arrangement relationship is reversed. Therefore, in the following description based on the drawings, the second reading section 52 and the second rotation member 32 will be described with reference to the drawings, and description of the first reading section 51 and the first rotation member 31 will be omitted.

As shown in FIGS. 4A and 4B, the first rotation member 31 and the second rotation member 32 are provided, on their peripheral surfaces 13, with a white background section 91 and a black background section 92, which are two background sections 9 having colors different in brightness from each other. Here, white and black are adopted as colors having different luminosity. Note that it is needless to say that the background section 9 is not limited to these two colors, and the background section may be composed of three or more colors including a color or the like in accordance with the background color of the document.

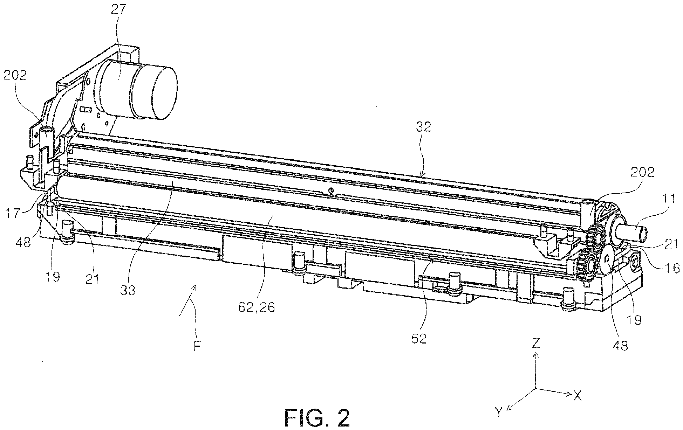

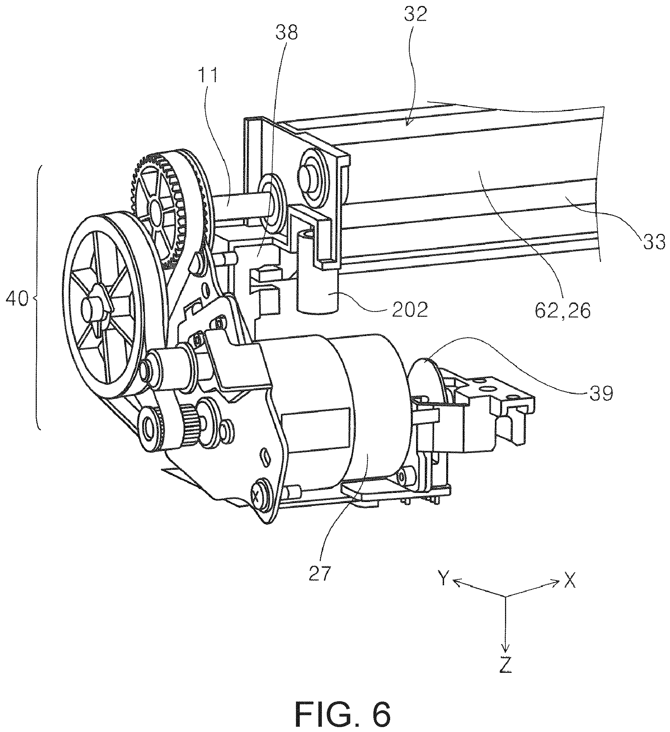

The first rotation member 31 and the second rotation member 32 are configured such that the white background section 91 and the black background section 92 can be positioned with respect to the reading positions 41, 42 (FIG. 1 and FIG. 2) of the first reading section 51 and the second reading section 52, respectively, by rotating around their shafts 11 (FIG. 1 and FIG. 2) under the power of a motor that forms the second drive source 27 (FIG. 2 and FIG. 6). FIGS. 4A and 4B show a state in which the white background section 91 is located at the reading position 42 of the second reading section 52.

Further, as shown in FIGS. 2 to 6, in the present embodiment, the first rotation member 31 and the second rotation member 32 are provided with a calibration reference section 33 for performing color calibration of the first reading section 51 and the second reading section 52. Here, the color of the calibration reference section 33 is white, but is not limited to white. For example, a color such as gray may be used.

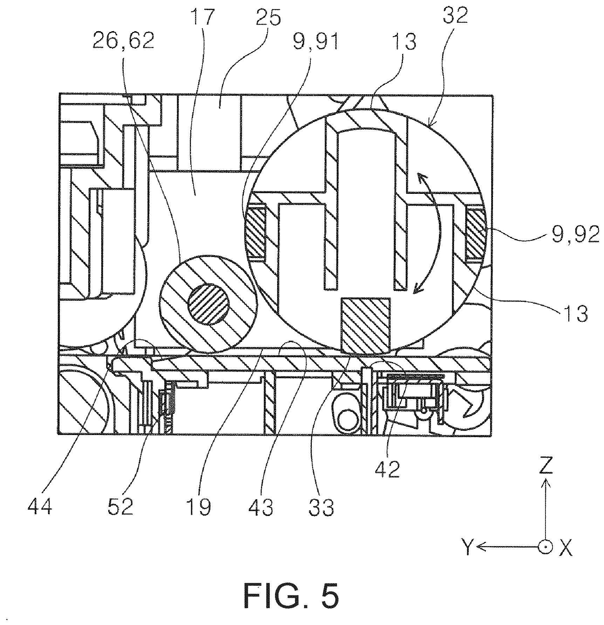

FIG. 5 shows a state in which the second rotation member 32 is rotated and the calibration reference section 33 is moved to a position facing the reading position 42.

Further, the first rotation member 31 is configured to be separable from the first reading section 51, which is fixed to the apparatus frame (not shown). The second rotation member 32 is also configured to separable from the second reading section 52, which is also fixed to the apparatus frame.

More specifically, the first rotation member 31 is separable from the translucent plate 43 (FIG. 1) of the first reading section 51 and the second rotation member 32 is separable from the translucent plate 43 (FIGS. 1, 4A, and 4B) of the second reading section 52. An inclined surface 44 is formed at an upstream end of the light translucent plate 43 with respect to the transport direction F, and the transported document 3 is guided by the inclined surface 44 toward the second rotation member 32.

### Guide member

As shown in FIG. 1, in the present embodiment, a first guide member 61 is provided upstream of the first rotation member 31 in the transport direction F, and serves as a guide member for guiding the document 3 between the first reading section 51 and the first rotation member 31. Similarly, as shown in FIGS. 1, 4A, and 4B, a second guide member 62 is provided upstream of the second rotation member 32 in the transport direction F and serves as a guide member for guiding the document 3 between the second reading section 52 and the second rotation member 32.

Further, the first guide member 61 is configured so as to be separable from the transport path 2 along which the document 3 is transported. Similarly, the second guide member 62 is configured to be separable from the transport path 2 along which the document 3 is transported. As shown in FIGS. 4A and 4B, specifically, the first guide member 61 is configured to be separable from the translucent plate 43 of the first reading section 51 and the second guide member 62 is configured to be separable from the translucent plate 43 of the second reading section 52.

As shown in FIGS. 2 to 4B, in the present embodiment, the first guide member 61 and the second guide member 62 each have a roller 26 whose peripheral surface is a curved surface. The peripheral surface of the roller 26 has a cylindrical shape. The roller 26 is configured as a drive roller 26 (the same reference numerals are used because they are the same) that rotates in response to the transmission of power from the first drive source 15. The first drive source 15 is a motor for driving the transport section 5.

Note that the drive roller 26 may be driven by a motor different from that of the first drive source 15.

### Structure that enables separation

As shown in FIGS. 2, 4A, and 4B, in this embodiment, both shafts 48, 11 (FIG. 2) of the second guide member 62 and the second rotation member 32, respectively, are integrally supported by bearings (not shown) of a pair of coupling members 16, 17, which are located on one end side and the other end side, respectively, in the width direction of the document 3. By this integration, the second guide member 62 and the second rotation member 32 are configured to integrally move in the separation direction by the coupling members 16, 17.

In a state in which the document 3 is not transported over the translucent plate 43 of the second reading section 52 (FIG. 4A), the relative arrangement of the second rotation member 32 and the second reading section 52, and the relative arrangement of the second guide member 62 and the transport path 2, in this case, the translucent plate 43, are determined in a state in which the contacting surfaces 19 (FIG. 2) of the coupling members 16, 17 contact contacted surfaces 21 (FIG. 2) of the second reading section 52. Note that in FIGS. 4A and 4B, the contacted surfaces 21 are omitted because the drawing would become complicated.

Note that in a state in which the document 3 is not transported over the light translucent plate 43 of the second reading section 52, a predetermined gap is provided between the second rotation member 32 and the second reading section 52. Similarly, a predetermined gap is provided between the second guide member 62 and the translucent plate 43. The predetermined gap is provided for appropriately transporting the document 3 between the second rotation member 32 and the second reading section 52 and between the second guide member 62 and the translucent plate 43 when transporting a document 3 having a small thickness or a document 3 having a small rigidity. Note that the predetermined gap may not be provided.

The first guide member 61 and the first rotation member 31 are also integrated by the pair of coupling members 16, 17 by a configuration similar to that for the second guide member 62 and the second rotation member 32.

In the present embodiment, as shown in FIGS. 2, 4A, and 4B, the first rotation member 31 is configured to separate from the first reading section 51, more specifically, to separate from the translucent plate 43, in association with the separation of the first guide member 61 from the transport path 2. Similarly, the second rotation member 32 is configured to separate from the second reading section 52, more specifically, to separate from the translucent plate 43, in association with the separation of the second guide member 62 from the transport path 2.

That is, interlocking of the first rotation member 31 and the first guide member 61 and interlocking of the second rotation member 32 and the second guide member 62 are realized by the integrated structure of the coupling members 16, 17.

Further, in this embodiment, as shown in FIG. 4B, the second guide member 62 is configured to separate from the transport path 2 by contact with the transported document 3. Here, when the transported document 3 reaches the upper surface of the light translucent plate 43 of the second reading section 52 and, after being transported further, reaches the position of the second guide member 62, the document 3 enters between the second guide member 62 on the upper side and the light translucent plate 43 on the lower side, and by this, the second guide member 62 is lifted upward and separated from the light translucent plate 43 by the thickness of the document 3. When the second guide member 62 moves away from the translucent plate 43 as described above, the coupling members 16, 17 also move together, and the second rotation member 32 also moves together with them, away from the translucent plate 43.

The first guide member 61 also has a structure similar to that of the second guide member 62 and is configured to separate from the transport path 2, that is, from the light translucent plate 43, by contact with the transported document 3.

Further, in the present embodiment, as shown in FIGS. 1 and 2, a first pressing member 201, which is a pressing member for elastically pressing the first rotation member 31 toward the first reading section 51, and a second pressing member 202, which is a pressing member for elastically pressing the second rotation member 32 toward the second reading section 52, are provided. The first pressing member 201 is disposed so as to press the lower surface, which is the first surface 301 of the document 3, upward from below, and the second pressing member 202 is disposed so as to press the upper surface, which is the second surface 302 of the document 3, downward from above. Note that the first pressing member 201 and the second pressing member 202 have coil springs, for example.

Further, under the above arrangement, the pushing force that pushes the first pressing member 210 in the +Z direction may be set to be larger than the pushing force that pushes the second pressing member 202 in the -Z direction.

### Description of operation of first embodiment

The operation of the first embodiment will be described with reference to FIGS. 4A and 4B. As shown in FIG. 4A, when the document 3 is transported in the transport direction F by the transport section 5 and the leading end of the document 3 passes between the second guide member 62 and the translucent plate 43, then as shown in FIG. 4B, the second guide section 62 is lifted and moved upward by the thickness of the document 3 and separates from the translucent plate 43. By the separation movement of the second guide section 62, the second rotation member 32 is also lifted upward via the coupling members 16, 17. That is, the second rotation member 32 also moves upward by a amount corresponding to the thickness of the document 3, and separates from the translucent plate 43. Accordingly, it is possible to perform transport and image reading corresponding to an increase in the thickness of the document 3.

### Description of effects of first embodiment

(1) According to the present embodiment, the first rotation member 31 and the second rotation member 32, which are rotation members provided with at least two background sections 9 on the peripheral surface 13, are configured to be separable from the first reading section 51 and the second reading section 52. As a result, when a thick document 3 is transported, the first rotation member 31 and the second rotation member 32 separate from the first reading section 51 and the second reading section 52 by an amount corresponding to an increase in the thickness of the document 3, so that the background section 9 can be positioned at an appropriate position in accordance with the thickness of the document 3 and reading quality can be stabilized.
   Since the first rotation member 31 and the second rotation member 32 are separable, it is possible to suppress the possibility that the document 3 hits the background section 9 when a thick document 3 is being transported, and it is possible to reduce the possibility that the background section 9 is damaged or that the document 3 jams.
(2) According to the present embodiment, the first guide member 61 and the second guide member 62 are provided upstream of the first rotation member 31 and the second rotation member 32 in the transport direction F, and guide the document 3 between the first reading section 51 and the first rotation member 31 and between the second reading section 52 and the second rotation member 32. Therefore, the document 3 can be appropriately guided between the first reading section 51 and the second reading section 52 and the first rotation member 31 and the second rotation member 32.
   The first guide member 61 and the second guide member 62 are separable from the transport path 2 along which the document 3 is transported. By this, when a thick original document 3 is transported, the first guide member 61 and the second guide member 62 separate from the transport path 2 by the increase in thickness of the original document 3, so that the original document 3 can be guided at an appropriate position according to the thickness.
(3) According to the present embodiment, the first rotation member 31 and the second rotation member 32 separate from the first reading section 51 and the second reading section 52 in association with the separation of the first guide member 61 and the second guide member 62. Thus, the first rotation member 31 and the second rotation member 32 can separate from the first reading section 51 and the second reading section 52 with good response when documents 3 having different thicknesses are transported.
(4) According to the present embodiment, the first guide member 61 and the second guide member 62 separate from the transport path 2 by contact from the transported document 3, so that a drive source for separating the first guide member 61 and the second guide member 62 is not required, and the configuration can be simplified.
(5) According to the present embodiment, the first guide member 61 and the first rotation member 31, and the second guide member 62 and the second rotation member 32, integrally move in the separation direction via the coupling members 16, 17. By this, the separation of the first guide member 61 and the second guide member 62 from the transport path 2 and the separation of the first rotation member 31 and the second rotation member 32 from the first reading section 51 and the second reading section 52 can be simultaneously performed with a simple structure. The separation state between the first reading section 51 and the first rotation member 31 and between the second reading section 52 and the second rotation member 32 can be maintained from the time when the leading end of the transported document 3 comes into contact with the first guide member 61 and with the second guide member 62 to the time when the trailing end of the document 3 comes out of contact with the first rotation member 31 and with the second rotation member 32.
(6) According to the present embodiment, since the first pressing member 201 and the second pressing member 202 for elastically pressing the first guide member 61 and the second guide member 62 toward the transport path 2 are provided, the document 3 can be held down by the first guide member 61 and the second guide member 62, thereby improving the transporting performance.
(7) According to the present embodiment, by using the roller 26, whose peripheral surface is a curved surface, as the first guide member 61 and the second guide member 62, the leading end of the document 3 comes into contact with the curved surface of the roller 26, so that it is possible to suppress the leading end of the document 3 from being bent, and it is possible to suppress a transport failure due to a transport load.
(8) When a thick document such as a passport or a booklet is transported, the transport amount may not be stable due to a transport load received from the transport path. According to this embodiment, by using the roller 26 as the drive roller 26, it is possible to stabilize the amount of transport when a thick document 3 is being transported.
(9) According to the present embodiment, since the transport section 5 and the drive roller 26 are rotated by the same first drive source 15, the transport amount of the document 3 is stabilized, and the image can be read with higher quality.
(10) According to the present embodiment, the first rotation member 31 and the second rotation member 32 are provided with a calibration reference section 33 for performing color calibration of the first reading section 51 and the second reading section 52. By this, by providing the calibration reference section 33, which is dedicated to color calibration, in the first rotation member 31 and the second rotation member 32 in the same manner as is the background section 9, the calibration reference section 33 can be provided in a simple structure without increasing the number of components.
(11) The first rotation member 31 and the second rotation member 32 having at least two background sections 9 on their peripheral surfaces are configured to be relatively separable from the first reading section 51 and the second reading section 52. As a result, when a thick document 3 is transported, the first rotation member 31 and the second rotation member 32 separate from the first reading section 51 and the second reading section 52 by an amount corresponding to an increase in the thickness of the document 3, so that the background section 9 can be positioned at an appropriate position in accordance with the thickness of the document 3 and reading quality can be stabilized.
(12) According to the present embodiment, since the first reading section 51 and the second reading section 52 are fixed, the reading quality can be stabilized.
(13) According to the present embodiment, since the pressing force of the first pressing member 201 is larger than the pressing force of the second pressing member 202, the first rotation member 31 provided below the transport path 2 can be maintained in an appropriate posture.

### SECOND EMBODIMENT

Next, an image reading device 1 according to a second embodiment will be described. The same portions as those in the first embodiment are denoted by the same reference numerals and the description of the configuration and the corresponding effects is omitted.

In the first embodiment, the first reading section 51 and the second reading section 52 are fixed, and the first rotation member 31 and the second rotation member 32 are separable. However, in this embodiment, assuming that the first surface 301 of the document 3 is an upper surface and the second surface 302 is a lower surface, the first rotation member 31 is fixed, the first reading section 51 is separable from the first rotation member 31, the second reading section 52 is fixed, and the second rotation member 32 is separable from the second reading section 52.

When a member located below the transport path 2 is moved to separate and approach the transport path 2, a mechanism for pushing up the member or maintaining the posture of the member is required, and the structure tends to be complicated. According to the present embodiment, since the first rotation member 31 and the second reading section 52, which are members located below the transport path 2, are fixed, and the first reading section 51 and the second rotation member 32, which are members located above the transport path 2, are configured to separate and approach, the complication of the structure can be suppressed.

### THIRD EMBODIMENT

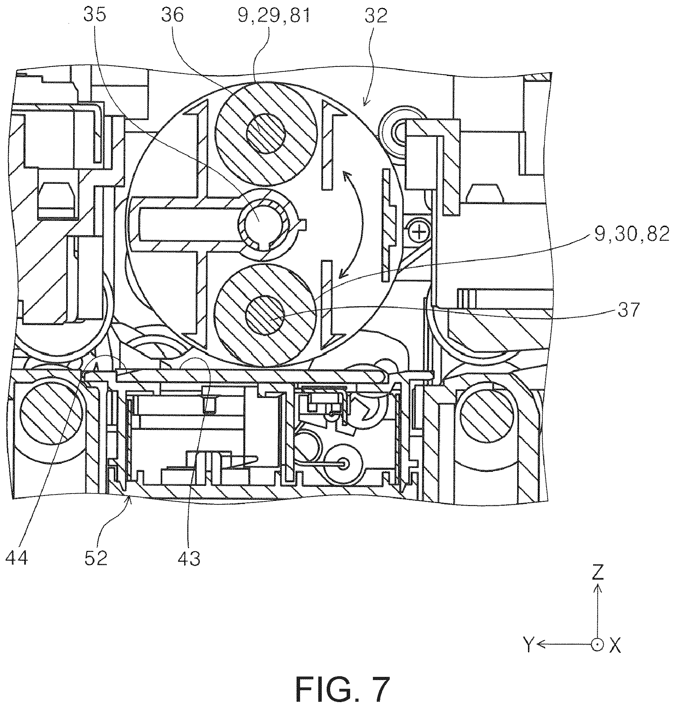

Next, an image reading device 1 according to a third embodiment will be described with reference to FIG. 7. The same portions as those in the first embodiment are denoted by the same reference numerals and the description of the configuration and the corresponding effects is omitted. In the third embodiment, the guide member and the background section are formed of one member. To be more specific, the first rotation member 31 and the second rotation member 32 are provided with a first rotation roller 81 having a peripheral surface in a first color 29 as the background section 9 and a second rotation roller 82 having a peripheral surface in a color 30 that is different from the first color 29 as the background section 9. In the third embodiment, the first color 29 is white, and the different color 30 is black. Note that since FIG. 7 shows a section of the second rotation member 32, the first rotation member 31 is not shown in FIG. 7. Illustration of the portion of the first rotation member 31 is omitted because the basic configuration is the same.

Further, the first rotation roller 81 and the second rotation roller 82 are configured as drive rollers that are rotated by power of a drive source. Here, the power of the first drive source 15 as the drive source for driving the transport section 5 is transmitted through a power transmission mechanism (not shown) and configured for rotational drive. Note that the drive source may be driven by a motor separate from the first drive source 15.

According to this embodiment, the first rotation member 31 and the second rotation member 32 are provided with the first rotation roller 81 and the second rotation roller 82 as the background section 9. As a result, when the document 3 is transported to the first rotation member 31 and the second rotation member 32, the first rotation roller 81 and the second rotation roller 82 are rotated while functioning as the background section 9, thereby improving the transport of the document 3. By the rotation, it is possible to reduce the possibility that the background section 9 is damaged or that the document 3 jams.

When a thick document 3 is transported, the transport amount may not be stable due to the transport load received from the transport path 2. According to this embodiment, the first rotation roller 81 and the second rotation roller 82 are drive rollers 26 that are rotated by the power of a drive source. As a result, the roller 26 serving as the background section 9 is driven and rotated, so that a transport force can be applied to a thick document 3, thereby stabilizing the transport amount at the time of transport.

### OTHER EMBODIMENTS

Although the image reading device 1 according to the present disclosure basically has the configuration of the above-described embodiments, it is of course possible to change or omit partial configuration within the scope not departing from the gist of the present disclosure.

In the first embodiment, the first rotation member 31 and the second rotation member 32 are configured to be separable from the first reading section 51 and the second reading section 52, but at least one of the first reading section 51 and the first rotation member 31 may be configured to be separable from the other, and at least one of the second reading section 52 and the second rotation member 32 may be configured to be separable from the other.

In the above embodiment, an image reading device that includes the first reading section 51 and the second reading section 52 as reading sections and can read both sides of the first surface and the second surface of the medium 3 has been described, but it can also be applied to an image reading device having a single side reading structure.

In the above embodiment, the structure has been described in which the rotation member is separable from the reading section, but the reading section may be separable from the rotation member.

In the above embodiment, the guide member has the roller 26. However, it may be a guide for guiding, and not the roller 26. Alternatively, the guide member may be configured to have a roller 26 and a guide for guiding.

Although the guide member is pushed up by the document 3 in the above embodiment, it may separate by a drive source.

The first rotation member 31 and the second rotation member 32 may be configured to not separate from the first reading section 51 and the second reading section 52 when a thin document 3, that is, a document 3 that is thinner than a predetermined thickness, is transported. For example, the first rotation member 31 and the second rotation member 32 may be provided at positions spaced apart from the translucent plate 43 by a predetermined amount.

It may be a configuration in which the first rotation member 31 and the second rotation member 32 are not interlocked with the first guide member 61 and the second guide member 62 when a document 3 that is thinner than the predetermined thickness is transported. In other words, the first rotation member 31 and the second rotation member 32 may be interlocked with the first guide member 61 and the second guide member 62 only when the document 3 thicker than the predetermined thickness is transported. For example, the coupling members 16, 17 may be configured not to transmit the displacement of the first guide member 61 and the second guide member 62 that corresponds to the predetermined thickness to the first rotation member 31 and the second rotation member 32 when a document 3 thinner than the predetermined thickness is transported.

## Claims

1. An image reading device, comprising:
a transport section configured to transport a document;
a reading section configured to read an image of the document transported in a transport direction by the transport section; and
a rotation member that is provided with, on a peripheral surface, at least two background sections having colors different in brightness from each other, that is provided at a position facing the reading section, and that, by rotating, changes a position of the background section with respect to a reading position of the reading section, wherein
the rotation member is separable from the reading section.

2. The image reading device according to claim 1, further comprising:
a guide member that is provided upstream of the rotation member in the transport direction and that guides the document between the reading section and the rotation member, wherein
the guide member is separable from a transport path along which the document is transported.

3. The image reading device according to claim 2, wherein
the rotation member separates from the reading section in association with separation of the guide member from the transport path.

4. The image reading device according to claim 3, wherein
the guide member separates from the transport path by contact with the transported document.

5. The image reading device according to claim 4, wherein
the guide member and the rotation member are integrated by a pair of coupling members positioned on one end side and on the other end side in the width direction of the document, and are configured to move integrally in a separation direction and
in a state where the document is not being transported, a relative arrangement of the rotation member and the reading section and a relative arrangement of the guide member and the transport path are determined in a state where a contacting surface of the coupling member contacts a contacted surface of the reading section.

6. The image reading device according to claim 2, further comprising:
a pressing member for elastically pressing the guide member toward the transport path.

7. The image reading device according to claim 2, wherein
the guide member has a roller whose peripheral surface is a curved surface.

8. The image reading device according to claim 7, wherein
the roller is a drive roller rotated by a first drive source.

9. The image reading device according to claim 8, wherein
the transport section is driven by power of the first drive source.

10. The image reading device according to claim 1, wherein
the rotation member includes
a first rotation roller having, as the background section, a peripheral surface in a first color and
a second rotation roller having, as the background section, a peripheral surface in a color different from the first color.

11. The image reading device according to claim 10, wherein
the first rotation roller and the second rotation roller are drive rollers rotated by power of a drive source.

12. The image reading device according to claim 2, wherein
the rotation member is a calibration reference section for performing color calibration of the reading section.

13. An image reading device, comprising:
a transport section configured to transport a document;
a first reading section configured to read an image of a first surface of the document transported in a transport direction through a transport path by the transport section,
a first rotation member that is provided with at least two background sections having colors different in brightness from each other, that is provided at a position facing the first reading section, and that, by rotating, changes a position of the background section with respect to a reading position of the first reading section;
a second reading section that is provided downstream of the first reading section in the transport direction and that is configured to read an image of a second surface of the document transported by the transport section; and
a second rotation member that is provided with at least two background sections having colors different in brightness from each other, that is provided at a position facing the second reading section, and that, by rotating, changes a position of the background section with respect to a reading position of the second reading section, wherein
at least one of the first reading section or the first rotation member is separable from the other and at least one of the second reading section or the second rotation member is separable from the other.

14. The image reading device according to claim 13, wherein
the first surface is an upper surface and the second surface is a lower surface,
the first rotation member is fixed and the first reading section is separable from the first rotation member, and
the second reading section is fixed and the second rotation member is separable from the second reading section.

15. The image reading device according to claim 13, wherein
the first reading section is fixed and the first rotation member is separable from the first reading section and
the second reading section is fixed and the second rotation member is separable from the second reading section.

16. The image reading device according to claim 15, wherein
the first surface is an upper surface and the second surface is a lower surface, and further comprising:
a first pressing member that resiliently pushes the first rotation member toward the first reading section and
a second pressing member that resiliently pushes the second rotation membertoward the second reading section, wherein
a pressing force of the first pressing member is larger than a pressing force of the second pressing member.
